# EUROPÄISCHE PATENTSCHRIFT

(11) **EP 4 197 858 B1**
(45) Veröffentlichungstag und Bekanntmachung des Hinweises auf die Patenterteilung: **03.07.2024**
(21) Anmeldenummer: 21215092.4
(22) Anmeldetag: 16.12.2021
(51) Int. Cl.: B60Q 1/04, B60R 21/34, B62D 25/08

(54) **STOSSABSORBIERENDES FAHRZEUGSCHEINWERFERSYSTEM**
SHOCK ABSORBING VEHICLE HEADLIGHT SYSTEM
SYSTÈME DE PHARE DE VÉHICULE AMORTISSANT DES CHOCS

(43) Veröffentlichungstag der Anmeldung: 21.06.2023
(73) Patentinhaber: ZKW Group GmbH, 3250 Wieselburg (AT)
(72) Erfinder: Zeuner, Markus, 3240 Mank (AT); Wagner, Florian, 3300 Winklarn (AT); Bemmerl, Markus, 3382 Loosdorf (AT)
(74) Vertreter: Patentanwaltskanzlei Matschnig & Forsthuber OG

(56) Entgegenhaltungen:
- EP-A1- 3 501 894
- FR-A1- 2 983 142
- JP-A- H0 930 321
- JP-A- H03 208 738
- JP-A- H11 165 581
- JP-A- 2021 079 770

## Beschreibung

Die Erfindung betrifft ein stoßabsorbierendes Fahrzeugscheinwerfersystem, aufweisend zumindest ein mit einem Fahrzeug fest verbindbares Fahrzeugrahmenelement, ein an dem Fahrzeugrahmenelement verschiebbar gehaltenes Fahrzeugscheinwerfergehäuse mit zumindest einem mit dem Fahrzeugscheinwerfergehäuse verbundenen Zapfen, welcher vorzugsweise fest mit dem Fahrzeugscheinwerfergehäuse verbunden ist, wobei das Fahrzeugrahmenelement zumindest eine Führung zur Aufnahme und linearen Führung des Zapfens aufweist, wobei der Zapfen mit der Führung in Eingriff steht, sodass das Fahrzeugscheinwerfergehäuse durch Verschiebung des Zapfens entlang der Führung geführt und dadurch in Bezug auf das Fahrzeugrahmenelement verschiebbar ist, zumindest ein mit einem Stoßfänger eines Fahrzeuges mechanisch verbindbares Auslöseelement, und zumindest eine mit dem Fahrzeugrahmenelement fest verbundene Auslösemechanik, welche dazu eingerichtet ist, das Auslöseelement sowie den Zapfen aufzunehmen und zumindest in Abhängigkeit von der Position des Auslöseelements zwischen einem den Zapfen blockierenden Zustand und einem den Zapfen freigebenden Zustand zu wechseln, wobei im den Zapfen freigebenden Zustand das Fahrzeugscheinwerfergehäuse mitsamt dem Zapfen in Bezug auf das Fahrzeugrahmenelement verschiebbar ist.

Stoßabsorbierende Fahrzeugscheinwerfer dienen dem Schutz von Passanten, da im Falle einer Kollision durch Verschiebung der Fahrzeugscheinwerfer Stoßenergie aufgenommen werden kann. Dokument EP1332915 B1 zeigt einen stoßabsorbierenden Fahrzeugscheinwerfer gemäß dem Stand der Technik.

Bestehende stoßabsorbierende Fahrzeugscheinwerfersysteme weisen häufig den Nachteil auf, dass die Scheinwerfergehäuse federnd gehalten werden, ohne dabei in einer Position fixiert zu werden. Dadurch können die Scheinwerfergehäuse auch in Situationen in Bewegung gesetzt werden, in denen eine solche Bewegung gar nicht erwünscht oder zweckmäßig ist. So können z.B. Erschütterungen, Vibrationen im Fahrbetrieb, manuell bei einer Reinigung oder Autowaschanlage ausgeübter Druck etc. zu einer Verschiebung der Scheinwerfer führen. Diese leichte Verschiebbarkeit vermittelt einen niederwertigen instabilen Eindruck. Eine Erhöhung der Steifigkeit des Systems würde allerdings den Fußgängerschutz reduzieren.

JP H03 208738 A offenbart ein stoßabsorbierendes Fahrzeugscheinwerfersystem, wobei ein Scheinwerfer mit einem mit einem Stoßfänger eines Fahrzeuges mechanisch verbindbarem Auslöseelement verbunden ist. Der Scheinwerfer ist fix auf einem beweglichem Rahmen fixiert, welcher dann mit der Hilfe der Roller auf einem Profil des Fahrzeugs verschiebbar ist.

Ein weiteres stoßabsorbierendes Fahrzeugscheinwerfersystem ist aus JP H09 30321 A bekannt.

Eine Aufgabe der Erfindung besteht daher darin ein stoßabsorbierendes Fahrzeugscheinwerfersystem zu schaffen, welches einen zuverlässigen Fußgängerschutz bietet und gleichzeitig eine hohe Wertanmutung aufweist.

Diese Aufgabe wird mit einem stoßabsorbierenden Fahrzeugscheinwerfersystem der eingangs genannten Art gelöst, bei welchem die Auslösemechanik erfindungsgemäß Folgendes umfasst: Einen in der Auslösemechanik drehbar gelagerten Dreharm, welcher Dreharm einen Eingriffsbereich zur Aufnahme des Zapfens aufweist, wobei der Dreharm dazu eingerichtet ist, zwischen zwei Positionen verdreht zu werden, nämlich zwischen einer Halteposition, in der der Dreharm einer Bewegung eines im Eingriffsbereichs aufgenommenen Zapfens entlang der Führung entgegen wirkt, und einer Freigabeposition, in der der Dreharm die Bewegung des Zapfens entlang der Führung freigibt, ein Verriegelungselement, welches linear verschiebbar in der Auslösemechanik gehalten ist, wobei das Verriegelungselement dazu eingerichtet ist, in den Dreharm in der Blockierposition einzugreifen, und diesen in Abhängigkeit von der Position des Auslöseelements in dieser Blockierposition zu verriegeln oder einen Wechsel in die Freigabeposition freizugeben, indem das Verriegelungselement zwischen einer Verriegelungsposition zum Blockieren des Dreharmes und einer Entriegelungsposition zum Freigeben des Wechsel des Dreharmes in die Freigabeposition verschiebbar ist, wobei ein erstes Federelement vorgesehen ist, das auf das Verriegelungselement eine dieses in die Verriegelungsposition drückende Federkraft ausübt, wobei das Verriegelungselement mit dem Auslöseelement dergestalt mechanisch gekoppelt ist, dass in einer Ausgangsposition des Auslöseelements das Verriegelungselement mit Hilfe des ersten Federelements in der Verriegelungsposition gehalten ist, und dass in Folge einer Verschiebung der Position des Auslöseelements in eine Auslöseposition das Verriegelungselement entgegen der Federkraft in die Entriegelungsposition verschoben ist, sodass eine Drehung des Dreharms von der Halteposition hin zur Freigabeposition ermöglicht wird, und die Auslösemechanik somit in den freigebenden Zustand wechselt. Durch diese Merkmale wird eine geschickte Konfiguration eines stoßabsorbierenden Fahrzeugscheinwerfersystems geschaffen, das einerseits die Verschiebung eines Fahrzeugscheinwerfergehäuses im Falle eines Unfalles zulässt, und andererseits unerwünschte Verschiebungen durch Verriegelung des Gehäuses verhindert.

Insbesondere kann vorgesehen sein, dass ein zweites Federelement vorgesehen ist, das mit dem Fahrzeugrahmenelement und mit dem Fahrzeugscheinwerfergehäuse verbunden ist, das dazu eingerichtet ist, auf das Fahrzeugscheinwerfergehäuse eine rückstellende Federkraft auszuüben, sodass der Zapfen in Richtung des Dreharmes gedrückt wird. Wenn der Zapfen im Dreharm gehalten wird, befindet sich das Fahrzeugscheinwerfergehäuse daher in einer Ruheposition. Im Falle einer Aktivierung durch das Auslöseelement wird der Dreharm freigegeben und das Fahrzeugscheinwerfergehäuse kann mitsamt dem Zapfen typischerweise entgegen der Hauptabstrahlrichtung des Scheinwerfers verschoben werden. Die Feder nimmt dabei auch Stoßenergie auf, die beispielsweise von einem Fußgänger im Falle einer Kollision auf das Fahrzeug, insbesondere den Scheinwerfer bzw. sein Gehäuse, übertragen wird.

Weiters kann vorgesehen sein, dass die Auslösemechanik ein drittes Federelement aufweist, das dergestalt angeordnet ist, dass auf den Dreharm eine Kraft ausgeübt wird, die den Dreharm in Richtung der Halteposition drückt. Dadurch kann eine automatische Rückstellung des Dreharms erfolgen. Insbesondere kann vorgesehen sein, dass die Auslösemechanik ein verschiebbares Halteelement sowie ein viertes Federelement aufweist, wobei das Halteelement mit Hilfe des Federelements dazu eingerichtet ist, einen Wechsel des Dreharms von der Freigabeposition in die Blockierposition zu behindern, indem auf einen in der Freigabeposition befindlichen Dreharm eine Federkraft ausgeübt wird, die der Federkraft des dritten Federelements entgegen wirkt und diese übersteigt, sodass erst durch Hinzukommen einer durch den Zapfen ausgeübten Rückstellkraft des zweiten Federelements eine Rückstellung des Dreharms durch Verschiebung des Halteelements entgegen der Federkraft des vierten Federelements freigegeben wird.

Weiters kann vorgesehen sein, dass das Auslöseelement als Vorsprung, insbesondere als Zapfen, ausgebildet ist.

Insbesondere kann vorgesehen sein, dass das Verriegelungselement einen Haken zum Eingriff in den Dreharm aufweist.

Weiters kann vorgesehen sein, dass die Führung im Fahrzeugrahmenelement als Nut oder Langloch ausgebildet ist.

Insbesondere kann vorgesehen sein, dass das Verriegelungselement dergestalt mit dem Auslöseelement mechanisch gekoppelt ist, dass durch Eindringen des Auslöseelements in das Verriegelungselement das Verriegelungselement entgegen der Kraft des ersten Federelements in die Entriegelungsposition gedrückt wird.

Weiters kann vorgesehen sein, dass das Fahrzeugscheinwerfergehäuse zumindest ein Lichtmodul einschließt, das zur Abgabe einer Lichtverteilung eingerichtet ist. Dadurch wird ein Scheinwerfer ausgebildet. Das System umfasst somit ebenso einen Scheinwerfer.

Weiters kann vorgesehen sein, dass die Führung und der Zapfen dergestalt ausgelegt sind, dass der maximale Hub des Fahrzeugscheinwerfergehäuses entlang der Führung zwischen 3cm und 10cm, insbesondere zwischen 5cm und 7cm, beträgt.

Weiters betrifft die Erfindung ein Kraftfahrzeug umfassend zumindest ein stoßabsorbierendes Fahrzeugscheinwerfersystem nach einem der vorhergehenden Ansprüche.

Weiters kann vorgesehen sein, dass das Kraftfahrzeug zwei Frontscheinwerfereinheiten zur Erzeugung einer Abblendlichtverteilung sowie einer Fernlichtverteilung aufweist, wobei das Kraftfahrzeug zwei stoßabsorbierende Fahrzeugscheinwerfersysteme aufweist, wobei die zwei Fahrzeugscheinwerfergehäuse der zwei stoßabsorbierenden Fahrzeugscheinwerfersysteme die Fahrzeugscheinwerfergehäuse der beiden Frontscheinwerfereinheiten ausbilden.

Weiters kann vorgesehen sein, dass das Kraftfahrzeug eine Stoßstange aufweist, wobei jedes Auslöseelement mit der Stoßstange verbunden ist, sodass im Falle einer kollisionsbedingten Verschiebung der Stoßstange das Auslöseelement in Richtung des Fahrzeugscheinwerfers verschoben wird, und damit eine Verschiebung des Fahrzeugscheinwerfers entgegen der Hauptfahrrichtung des Fahrzeuges ermöglicht ist.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung einer Ausführungsform eines erfindungsgemäßen stoßabsorbierenden Fahrzeugscheinwerfersystems in einer ersten Position,
Figur 2 eine schematische Darstellung des erfindungsgemäßen stoßabsorbierenden Fahrzeugscheinwerfersystems gemäß Fig. 1 in einer zweiten Position,
Figur 3 eine schematische Darstellung des erfindungsgemäßen stoßabsorbierenden Fahrzeugscheinwerfersystems gemäß Fig. 1 und Fig. 2 in einer dritten Position, und
Figur 4 eine schematische Seitenansicht des erfindungsgemäßen stoßabsorbierenden Fahrzeugscheinwerfersystems gemäß Fig. 1 bis 3.

In den folgenden Figuren bezeichnen - sofern nicht anders angegeben - gleiche Bezugszeichen gleiche Merkmale.

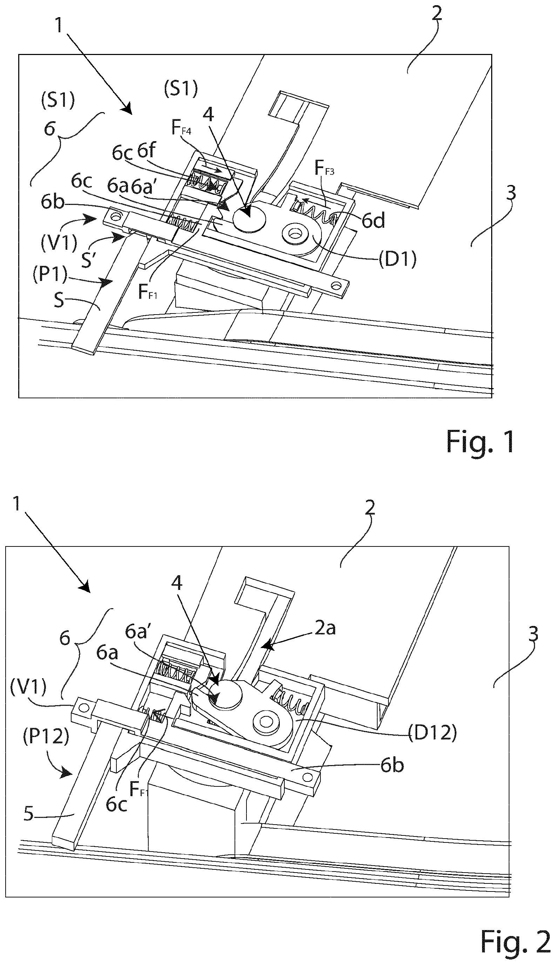

Fig. 1 zeigt eine schematische Darstellung einer Ausführungsform eines erfindungsgemäßen stoßabsorbierenden Fahrzeugscheinwerfersystems 1 in einer ersten Position. Das stoßabsorbierende Fahrzeugscheinwerfersystem 1 umfasst zumindest ein mit einem Fahrzeug fest verbindbares Fahrzeugrahmenelement 2 sowie ein an dem Fahrzeugrahmenelement 2 verschiebbar gehaltenes Fahrzeugscheinwerfergehäuse 3 mit zumindest einem mit dem Fahrzeugscheinwerfergehäuse 3 verbundenen Zapfen 4, welcher vorzugsweise fest mit dem Fahrzeugscheinwerfergehäuse 3 verbunden ist. Das Fahrzeugrahmenelement 2 weist zumindest eine Führung 2a zur Aufnahme und linearen Führung des Zapfens 4 auf, wobei der Zapfen 4 mit der Führung 2a in Eingriff steht, sodass das Fahrzeugscheinwerfergehäuse 3 durch Verschiebung des Zapfens 4 entlang der Führung 2a geführt und dadurch in Bezug auf das Fahrzeugrahmenelement 2 verschiebbar ist.

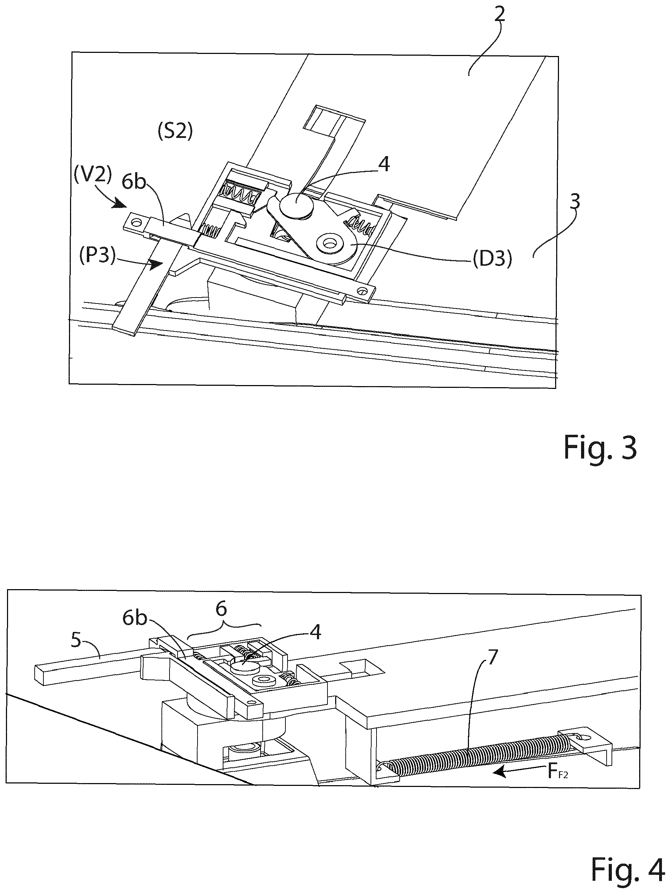

Weiters weist das stoßabsorbierende Fahrzeugscheinwerfersystem 1 zumindest ein mit einem Stoßfänger (in den Figuren nicht gezeigt) eines Fahrzeuges mechanisch verbindbares Auslöseelement 5, und zumindest eine mit dem Fahrzeugrahmenelement 2 fest verbundene Auslösemechanik 6 auf. Die Auslösemechanik 6 ist dazu eingerichtet, das Auslöseelement 5 sowie den Zapfen 4 aufzunehmen und zumindest in Abhängigkeit von der Position des Auslöseelements 5 zwischen einem den Zapfen 4 blockierenden Zustand S1 (siehe Fig. 1) und einem den Zapfen 4 freigebenden Zustand S2 (siehe Fig. 3) zu wechseln. In dem den Zapfen 4 freigebenden Zustand S2 ist das Fahrzeugscheinwerfergehäuse 3 mitsamt dem Zapfen 4 in Bezug auf das Fahrzeugrahmenelement 2 verschiebbar, und zwar vorzugsweise entgegen der Hauptfahrrichtung des Fahrzeuges, sodass ein das Fahrzeugscheinwerfergehäuse 3 umfassender Scheinwerfer im Falle einer Kollision mit einem Fußgänger in das Fahrzeug hinein geschoben werden kann.

In Fig. 1 ist erkennbar, dass die Auslösemechanik 6 einen in der Auslösemechanik 6 drehbar gelagerten Dreharm 6a umfasst. Der Dreharm 6a weist einen Eingriffsbereich 6a' zur Aufnahme des Zapfens 4 auf, wobei der Dreharm 6a dazu eingerichtet ist, zwischen zwei Positionen verdreht zu werden, nämlich zwischen einer Halteposition D1, in der der Dreharm 6a einer Bewegung eines im Eingriffsbereichs 6a' aufgenommenen Zapfens 4 entlang der Führung 2a entgegen wirkt, und einer Freigabeposition D2 (siehe Fig. 3), in der der Dreharm 6a die Bewegung des Zapfens 4 entlang der Führung 2a freigibt. Weiters weist die Auslösemechanik 6 ein Verriegelungselement 6b auf, welches linear verschiebbar in der Auslösemechanik 6 gehalten ist, wobei das Verriegelungselement 6b dazu eingerichtet ist, in den Dreharm 6a in der Blockierposition D1 einzugreifen, und diesen in Abhängigkeit von der Position des Auslöseelements 5 in dieser Blockierposition D1 zu verriegeln oder einen Wechsel in die Freigabeposition D2 freizugeben. Hierzu ist vorgesehen, dass das Verriegelungselement 6b zwischen einer Verriegelungsposition V1 zum Blockieren des Dreharmes 6a und einer Entriegelungsposition V2 (siehe Fig. 3) zum Freigeben des Wechsel des Dreharmes 6a in die Freigabeposition D2 verschiebbar ist. Es ist ein erstes Federelement 6c vorgesehen, das auf das Verriegelungselement 6b eine dieses in die Verriegelungsposition V1 drückende Federkraft F_{F1} ausübt. Das Verriegelungselement 6b ist mit dem Auslöseelement 5 dergestalt mechanisch gekoppelt, dass in einer Ausgangsposition P1 des Auslöseelements 5 das Verriegelungselement 6b mit Hilfe des ersten Federelements 6c in der Verriegelungsposition V1 gehalten ist, und dass in Folge einer Verschiebung der Position des Auslöseelements 5 in eine Auslöseposition P2 (siehe Fig. 3) das Verriegelungselement 6b entgegen der Federkraft F_{F1} in die Entriegelungsposition V2 verschoben ist, sodass eine Drehung des Dreharms 6a von der Halteposition D1 hin zur Freigabeposition D2 ermöglicht wird, und die Auslösemechanik 6 somit in den freigebenden Zustand S2 wechselt.

In Fig. 4, die eine seitliche Ansicht des stoßabsorbierenden Fahrzeugscheinwerfersystems 1 zeigt, ist erkennbar, dass ein zweites Federelement 7 vorgesehen ist, das mit dem Fahrzeugrahmenelement 2 und mit dem Fahrzeugscheinwerfergehäuse 3 verbunden ist. Das zweite Federelement 7 ist dazu eingerichtet, auf das Fahrzeugscheinwerfergehäuse 3 eine rückstellende Federkraft F_{F2} auszuüben, sodass der Zapfen 4 in Richtung des Dreharmes 6a gedrückt wird. Wenn der Zapfen 4 im Dreharm 6a gehalten wird, befindet sich das Fahrzeugscheinwerfergehäuse 3 daher in einer Ruheposition; im Falle eines Stoßes des Auslöseelements 5 wird der Dreharm 6a freigegeben und das Fahrzeugscheinwerfergehäuse 3 kann mitsamt dem Zapfen 4 typischerweise entgegen der Hauptabstrahlrichtung des Scheinwerfers verschoben werden. Die Feder 7 nimmt dabei auch Stoßenergie auf, die beispielsweise von einem Fußgänger im Falle einer Kollision auf das Fahrzeug, insbesondere auf den Scheinwerfer, übertragen wird.

Mit Blick auf Fig. 1 sei nun erwähnt, dass die Auslösemechanik 6 ein drittes Federelement 6d aufweisen kann, das dergestalt angeordnet ist, dass auf den Dreharm 6a eine Kraft F_{F3} ausgeübt wird, die den Dreharm 6a in Richtung der Halteposition D1 drückt. Dadurch kann eine automatische Rückstellung des Dreharms 6a erfolgen.

Weiters kann vorgesehen sein, dass die Auslösemechanik 6 ein verschiebbares Halteelement 6e sowie ein viertes Federelement 6f aufweist. Das Halteelement 6e ist mit Hilfe des Federelements 6f dazu eingerichtet, einen Wechsel des Dreharms 6a von der Freigabeposition D2 in die Blockierposition D1 zu behindern, indem auf einen in der Freigabeposition D2 befindlichen Dreharm 6a eine Federkraft F_{F4} ausgeübt wird, die der Federkraft F_{F3} des dritten Federelements 6d entgegen wirkt und diese übersteigt, sodass erst durch Hinzukommen einer durch den Zapfen 4 ausgeübten Rückstellkraft F_{F2} des zweiten Federelements 7 eine Rückstellung des Dreharms 6a durch Verschiebung des Halteelements 6e entgegen der Federkraft F_{F4} des vierten Federelements 6f freigegeben wird. Das Auslöseelement 5 kann als Vorsprung, insbesondere als Zapfen, ausgebildet sein. Es kann vorgesehen sein, dass das Verriegelungselement 6b einen Haken 6b' zum Eingriff in den Dreharm 6a aufweist.

Mit Blick auf Fig. 1 bis 3 sei nun ein Auslösevorgang des stoßabsorbierenden Fahrzeugscheinwerfersystems 1 erklärt, wobei das stoßabsorbierende Fahrzeugscheinwerfersystem 1 selbstheilend ausgeführt ist. Wird ausgehend von Fig. 1 ein Stoß auf eine mit dem Auslöseelement 5 verbundene Stoßstange bzw. einen Stoßfänger durchgeführt, dann kann sich das Auslöseelement 5 hin zu der Auslösemechanik 6 verschieben. Durch die eindringende geschrägte Fläche 5' des Auslöseelements 5 (rein schematische Darstellung) wird das Verriegelungselement 6b entgegen der Federkraft F_{F1} nach links geschoben (siehe Fig. 2 in einer Mittelposition P12 und Fig. 3 in der Position P2), wodurch der Haken 6b' nicht mehr in den Dreharm 6a eingreift. Wirkt der Stoß nun auch auf das Fahrzeugscheinwerfergehäuse 3, so kann dieses mitsamt dem Zapfen 4 entlang der Führung 2a in Richtung der Fahrzeugmitte verschoben werden. Die durch den Zapfen 4 ausgeübte Kraft drückt den Dreharm 6a entgegen der Federkraft F_{F3} in die Position D3 (siehe Fig. 3), in der der Zapfen 4 freigegeben wird, sodass dieser entlang der Führung 2a entgegen der Federkraft F_{F2} in Richtung der Fahrzeugmitte bis zum Erreichen eines maximalen Hubes gleiten kann. Die Führung 2a und der Zapfen 4 können dergestalt ausgelegt sein, dass der maximale Hub des Fahrzeugscheinwerfergehäuses 3 entlang der Führung 2a zwischen 3cm und 10cm, insbesondere zwischen 5cm und 7cm, beträgt. Die Führung 2a im Fahrzeugrahmenelement 2 kann z.B. als Nut oder Langloch ausgebildet sein. Anders ausgedrückt ist das Verriegelungselement 6b dergestalt mit dem Auslöseelement 5 mechanisch gekoppelt, dass durch Eindringen des Auslöseelements 5 in das Verriegelungselement 6b das Verriegelungselement 6b entgegen der Kraft des ersten Federelements 6c in die Entriegelungsposition V2 gedrückt wird. Fig. 2 zeigt die Auslösemechanik 6 in einer Zwischenposition, in der der Zapfen 4 noch im Dreharm 6a gehalten wird, der Dreharm 6a in einer Position P12 allerdings nicht mehr durch das Verriegelungselement 6b verriegelt ist und daher sowohl in Richtung der Federkraft F_{F3} als auch entgegen dieser Kraft bewegt werden kann. Die Bewegungsrichtung hängt davon ab, ob auf das Scheinwerfergehäuse 3 noch eine äußere Kraft in Folge einer Kollision wirkt. Falls dies nicht zutrifft, so wird der Zapfen 4 in den Dreharm 6a gedrückt, sodass sich der Dreharm 6a mitsamt den Zapfen wieder in die Ausgangsposition D1 begibt. Das Auslöseelement 5 verlässt dann die Zwischenposition P12 und wandert wieder zurück in die Ausgangsposition P1.

Es kann vorgesehen sein, dass das Fahrzeugscheinwerfergehäuse 3 zumindest ein Lichtmodul einschließt, das zur Abgabe einer Lichtverteilung, insbesondere einer Abblendlichtverteilung und/oder einer Fernlichtverteilung eingerichtet ist.

Weiters betrifft die Erfindung ein in den Figuren nicht gezeigtes Kraftfahrzeug, umfassend zumindest ein erfindungsgemäßes stoßabsorbierendes Fahrzeugscheinwerfersystem 1.

Das Kraftfahrzeug kann zwei Frontscheinwerfereinheiten zur Erzeugung einer Abblendlichtverteilung sowie einer Fernlichtverteilung aufweisen, wobei das Kraftfahrzeug zwei erfindungsgemäße stoßabsorbierende Fahrzeugscheinwerfersysteme aufweisen kann, wobei die zwei Fahrzeugscheinwerfergehäuse 3 der zwei stoßabsorbierenden Fahrzeugscheinwerfersysteme die Fahrzeugscheinwerfergehäuse der beiden Frontscheinwerfereinheiten ausbilden.

Weiters kann vorgesehen sein, dass das Kraftfahrzeug eine Stoßstange aufweist, wobei jedes Auslöseelement 5 mit der Stoßstange verbunden ist, sodass im Falle einer kollisionsbedingten Verschiebung der Stoßstange das Auslöseelement in Richtung des Fahrzeugscheinwerfers verschoben wird, und damit eine Verschiebung des Fahrzeugscheinwerfers entgegen der Hauptfahrrichtung des Fahrzeuges ermöglicht ist.

Die Erfindung ist nicht auf die gezeigten Ausführungsformen beschränkt, sondern durch den gesamten Schutzumfang der Ansprüche definiert. Etwaige Bezugszeichen in den Ansprüchen sind beispielhaft und dienen nur der einfacheren Lesbarkeit der Ansprüche, ohne diese einzuschränken.

## Patentansprüche

1. Stoßabsorbierendes Fahrzeugscheinwerfersystem (1), aufweisend
- zumindest ein mit einem Fahrzeug fest verbindbares Fahrzeugrahmenelement (2),
- ein an dem Fahrzeugrahmenelement (2) verschiebbar gehaltenes Fahrzeugscheinwerfergehäuse (3) mit zumindest einem mit dem Fahrzeugscheinwerfergehäuse (3) verbundenen Zapfen (4), welcher vorzugsweise fest mit dem Fahrzeugscheinwerfergehäuse (3) verbunden ist, wobei das Fahrzeugrahmenelement (2) zumindest eine Führung (2a) zur Aufnahme und linearen Führung des Zapfens (4) aufweist, wobei der Zapfen (4) mit der Führung (2a) in Eingriff steht, sodass das Fahrzeugscheinwerfergehäuse (3) durch Verschiebung des Zapfens (4) entlang der Führung (2a) geführt und dadurch in Bezug auf das Fahrzeugrahmenelement (2) verschiebbar ist,
- zumindest ein mit einem Stoßfänger eines Fahrzeuges mechanisch verbindbares Auslöseelement (5), und
- zumindest eine mit dem Fahrzeugrahmenelement (2) fest verbundene Auslösemechanik (6), welche dazu eingerichtet ist, das Auslöseelement (5) sowie den Zapfen (4) aufzunehmen und zumindest in Abhängigkeit von der Position des Auslöseelements (5) zwischen einem den Zapfen (4) blockierenden Zustand (S1) und einem den Zapfen (4) freigebenden Zustand (S2) zu wechseln, wobei im den Zapfen (4) freigebenden Zustand (S2) das Fahrzeugscheinwerfergehäuse (3) mitsamt dem Zapfen (4) in Bezug auf das Fahrzeugrahmenelement (2) verschiebbar ist,
wobei die Auslösemechanik (6) Folgendes umfasst:
*einen in der Auslösemechanik (6) drehbar gelagerten Dreharm (6a), welcher Dreharm (6a) einen Eingriffsbereich (6a') zur Aufnahme des Zapfens (4) aufweist, wobei der Dreharm (6a) dazu eingerichtet ist, zwischen zwei Positionen verdreht zu werden, nämlich zwischen einer Halteposition (D1), in der der Dreharm (6a) einer Bewegung eines im Eingriffsbereichs (6a') aufgenommenen Zapfens (4) entlang der Führung (2a) entgegen wirkt, und einer Freigabeposition (D2), in der der Dreharm (6a) die Bewegung des Zapfens (4) entlang der Führung (2a) freigibt,
*ein Verriegelungselement (6b), welches linear verschiebbar in der Auslösemechanik (6) gehalten ist, wobei das Verriegelungselement (6b) dazu eingerichtet ist, in den Dreharm (6a) in der Blockierposition (D1) einzugreifen, und diesen in Abhängigkeit von der Position des Auslöseelements (5) in dieser Blockierposition (D1) zu verriegeln oder einen Wechsel in die Freigabeposition (D2) freizugeben, indem das Verriegelungselement (6b) zwischen einer Verriegelungsposition (V1) zum Blockieren des Dreharmes (6a) und einer Entriegelungsposition (V2) zum Freigeben des Wechsel des Dreharmes (6a) in die Freigabeposition (D2) verschiebbar ist, wobei ein erstes Federelement (6c) vorgesehen ist, das auf das Verriegelungselement (6b) eine dieses in die Verriegelungsposition (V1) drückende Federkraft (F_{F1}) ausübt, wobei das Verriegelungselement (6b) mit dem Auslöseelement (5) dergestalt mechanisch gekoppelt ist, dass in einer Ausgangsposition (P1) des Auslöseelements (5) das Verriegelungselement (6b) mit Hilfe des ersten Federelements (6c) in der Verriegelungsposition (V1) gehalten ist, und dass in Folge einer Verschiebung der Position des Auslöseelements (5) in eine Auslöseposition (P2) das Verriegelungselement (6b) entgegen der Federkraft (F_{F1}) in die Entriegelungsposition (V2) verschoben ist, sodass eine Drehung des Dreharms (6a) von der Halteposition (D1) hin zur Freigabeposition (D2) ermöglicht wird, und die Auslösemechanik (6) somit in den freigebenden Zustand (S2) wechselt.

2. Stoßabsorbierendes Fahrzeugscheinwerfersystem (1) nach Anspruch 1, wobei ein zweites Federelement (7) vorgesehen ist, das mit dem Fahrzeugrahmenelement (2) und mit dem Fahrzeugscheinwerfergehäuse (3) verbunden ist, wobei das Federelement (7) dazu eingerichtet ist, auf das Fahrzeugscheinwerfergehäuse (3) eine rückstellende Federkraft (F_{F2}) auszuüben, sodass der Zapfen (4) in Richtung des Dreharmes (6a) gedrückt wird.

3. Stoßabsorbierendes Fahrzeugscheinwerfersystem (1) nach einem der vorhergehenden Ansprüche, wobei die Auslösemechanik (6) ein drittes Federelement (6d) aufweist, das dergestalt angeordnet ist, dass auf den Dreharm (6a) eine Kraft (F_{F3}) ausgeübt wird, die den Dreharm (6a) in Richtung der Halteposition (D1) drückt.

4. Stoßabsorbierendes Fahrzeugscheinwerfersystem (1) nach einem der vorhergehenden Ansprüche, wobei die Auslösemechanik (6) ein verschiebbares Halteelement (6e) sowie ein viertes Federelement (6f) aufweist, wobei das Halteelement (6e) mit Hilfe des Federelements (6f) dazu eingerichtet ist, einen Wechsel des Dreharms (6a) von der Freigabeposition (D2) in die Blockierposition (D1) zu behindern, indem auf einen in der Freigabeposition (D2) befindlichen Dreharm (6a) eine Federkraft (F_{F4}) ausgeübt wird, die der Federkraft (F_{F3}) des dritten Federelements (6d) entgegen wirkt und diese übersteigt, sodass erst durch Hinzukommen einer durch den Zapfen (4) ausgeübten Rückstellkraft (F_{F2}) des zweiten Federelements (7) eine Rückstellung des Dreharms (6a) durch Verschiebung des Halteelements (6e) entgegen der Federkraft (F_{F4}) des vierten Federelements (6f) freigegeben wird.

5. Stoßabsorbierendes Fahrzeugscheinwerfersystem (1) nach einem der vorhergehenden Ansprüche, wobei das Auslöseelement (5) als Vorsprung, insbesondere als Zapfen, ausgebildet ist.

6. Stoßabsorbierendes Fahrzeugscheinwerfersystem (1) nach einem der vorhergehenden Ansprüche, wobei das Verriegelungselement (6b) einen Haken (6b') zum Eingriff in den Dreharm (6a) aufweist.

7. Stoßabsorbierendes Fahrzeugscheinwerfersystem (1) nach einem der vorhergehenden Ansprüche, wobei die Führung (2a) im Fahrzeugrahmenelement (2) als Nut oder Langloch ausgebildet ist.

8. Stoßabsorbierendes Fahrzeugscheinwerfersystem (1) nach einem der vorhergehenden Ansprüche, wobei das Verriegelungselement (6b) dergestalt mit dem Auslöseelement (5) mechanisch gekoppelt ist, dass durch Eindringen des Auslöseelements (5) in das Verriegelungselement (6b) das Verriegelungselement (6b) entgegen der Kraft des ersten Federelements (6c) in die Entriegelungsposition (V2) gedrückt wird.

9. Stoßabsorbierendes Fahrzeugscheinwerfersystem (1) nach einem der vorhergehenden Ansprüche, wobei das Fahrzeugscheinwerfergehäuse (3) zumindest ein Lichtmodul einschließt, das zur Abgabe einer Lichtverteilung eingerichtet ist.

10. Stoßabsorbierendes Fahrzeugscheinwerfersystem (1) nach einem der vorhergehenden Ansprüche, wobei die Führung (2a) und der Zapfen (4) dergestalt ausgelegt sind, dass der maximale Hub des Fahrzeugscheinwerfergehäuses (3) entlang der Führung (2a) zwischen 3cm und 10cm, insbesondere zwischen 5cm und 7cm, beträgt.

11. Kraftfahrzeug umfassend zumindest ein stoßabsorbierendes Fahrzeugscheinwerfersystem (1) nach einem der vorhergehenden Ansprüche.

12. Kraftfahrzeug nach Anspruch 11, wobei das Kraftfahrzeug zwei Frontscheinwerfereinheiten zur Erzeugung einer Abblendlichtverteilung sowie einer Fernlichtverteilung aufweist, wobei das Kraftfahrzeug zwei stoßabsorbierende Fahrzeugscheinwerfersysteme nach einem der Ansprüchen 1 bis 10 aufweist, wobei die zwei Fahrzeugscheinwerfergehäuse (3) der zwei stoßabsorbierenden Fahrzeugscheinwerfersysteme die Fahrzeugscheinwerfergehäuse der beiden Frontscheinwerfereinheiten ausbilden.

13. Kraftfahrzeug nach Anspruch 12, wobei das Kraftfahrzeug eine Stoßstange aufweist, wobei jedes Auslöseelement (5) mit der Stoßstange verbunden ist, sodass im Falle einer kollisionsbedingten Verschiebung der Stoßstange das Auslöseelement in Richtung des Fahrzeugscheinwerfers verschoben wird, und damit eine Verschiebung des Fahrzeugscheinwerfers entgegen der Hauptfahrrichtung des Fahrzeuges ermöglicht ist.

## Claims

1. Impact-absorbing vehicle headlamp system (1), comprising
- at least one vehicle frame element (2) which can be firmly connected to a vehicle,
- a vehicle headlamp housing (3) which is held displaceably on the vehicle frame element (2) and has at least one pin (4) which is connected to the vehicle headlamp housing (3) and is preferably firmly connected to the vehicle headlamp housing (3), wherein the vehicle frame element (2) has at least one guide (2a) for receiving and linearly guiding the pin (4), wherein the pin (4) is in engagement with the guide (2a), such that the vehicle headlamp housing (3) is guided along the guide (2a) by displacement of the pin (4) and is thereby displaceable with respect to the vehicle frame element (2),
- at least one release element (5) which can be mechanically connected to a bumper of a vehicle, and
- at least one release mechanism (6) which is firmly connected to the vehicle frame element (2) and which is configured to receive the release element (5) and the pin (4) and to change between a state (S1) blocking the pin (4) and a state (S2) releasing the pin (4) at least as a function of the position of the release element (5), wherein in the state (S2) in which the pin (4) is released, the vehicle headlight housing (3) together with the pin (4) can be displaced in relation to the vehicle frame element (2),
wherein the release mechanism (6) comprises the following:
*a rotating arm (6a) rotatably mounted in the release mechanism (6), which rotating arm (6a) has an engagement area (6a') for receiving the pin (4), wherein the rotating arm (6a) is arranged to be rotated between two positions, namely between a holding position (D1), in which the rotating arm (6a) counteracts a movement of a pin (4) received in the engagement area (6a') along the guide (2a), and a release position (D2) in which the rotating arm (6a) releases the movement of the pin (4) along the guide (2a),
*a locking element (6b) which is held linearly displaceably in the release mechanism (6), the locking element (6b) being set up to engage in the rotary arm (6a) in the blocking position (D1) and, depending on the position of the release element (5) in this blocking position (D1), to lock it or to release a change to the release position (D2), in that the locking element (6b) is displaceable between a locking position (V1) for blocking the rotary arm (6a) and an unlocking position (V2) for releasing the change of the rotary arm (6a) into the release position (D2), a first spring element (6c) being provided, which exerts a spring force (FF1) on the locking element (6b) which presses the latter into the locking position (V1), the locking element (6b) being mechanically coupled to the release element (5) in such a way that in an initial position (P1) of the release element (5) the locking element (6b) is held in the locking position (V1) with the aid of the first spring element (6c), and that as a result of a displacement of the position of the release element (5) into a release position (P2), the locking element (6b) is displaced against the spring force (FF1) into the unlocking position (V2), such that a rotation of the rotating arm (6a) from the holding position (D1) to the release position (D2) is made possible, and the release mechanism (6) thus changes to the releasing state (S2).

2. Impact-absorbing vehicle headlamp system (1) according to claim 1, wherein a second spring element (7) is provided, which is connected to the vehicle frame element (2) and to the vehicle headlamp housing (3), wherein the spring element (7) is arranged to exert a restoring spring force (FF2) on the vehicle headlamp housing (3), such that the pin (4) is pressed in the direction of the rotating arm (6a).

3. Impact-absorbing vehicle headlamp system (1) according to one of the preceding claims, wherein the release mechanism (6) has a third spring element (6d) which is arranged in such a way that a force (FF3) is exerted on the rotating arm (6a) which presses the rotating arm (6a) in the direction of the holding position (D1).

4. Impact-absorbing vehicle headlamp system (1) according to one of the preceding claims, wherein the release mechanism (6) has a displaceable retaining element (6e) and a fourth spring element (6f), wherein the retaining element (6e) is set up with the aid of the spring element (6f) to hinder a change of the rotating arm (6a) from the release position (D2) into the blocking position (D1) by exerting a spring force (FF4) on a rotary arm (6a) located in the release position (D2), which spring force counteracts and exceeds the spring force (FF3) of the third spring element (6d), so that only the addition of a restoring force (FF2) of the second spring element (7) exerted by the pivot (4) releases a return of the rotary arm (6a) by displacement of the retaining element (6e) counter to the spring force (FF4) of the fourth spring element (6f).

5. Impact-absorbing vehicle headlamp system (1) according to one of the preceding claims, wherein the release element (5) is designed as a projection, in particular as a pin.

6. Impact absorbing vehicle headlamp system (1) according to one of the preceding claims, wherein the locking element (6b) comprises a hook (6b') for engagement with the rotating arm (6a).

7. Impact-absorbing vehicle headlamp system (1) according to one of the preceding claims, wherein the guide (2a) in the vehicle frame element (2) is formed as a groove or elongated hole.

8. Impact-absorbing vehicle headlamp system (1) according to one of the preceding claims, wherein the locking element (6b) is mechanically coupled to the triggering element (5) in such a way that by penetration of the triggering element (5) into the locking element (6b), the locking element (6b) is pressed into the unlocking position (V2) against the force of the first spring element (6c).

9. Impact-absorbing vehicle headlamp system (1) according to one of the preceding claims, wherein the vehicle headlamp housing (3) includes at least one light module which is arranged to emit a light distribution.

10. Impact-absorbing vehicle headlamp system (1) according to one of the preceding claims, wherein the guide (2a) and the pin (4) are designed in such a way that the maximum stroke of the vehicle headlamp housing (3) along the guide (2a) is between 3 cm and 10 cm, in particular between 5 cm and 7 cm.

11. Motor vehicle comprising at least one impact-absorbing vehicle headlamp system (1) according to one of the preceding claims.

12. Motor vehicle according to claim 11, wherein the motor vehicle has two front headlamp units for generating a dipped beam distribution and a main beam distribution, wherein the motor vehicle has two impact-absorbing vehicle headlamp systems according to one of claims 1 to 10, wherein the two vehicle headlamp housings (3) of the two impact-absorbing vehicle headlamp systems form the vehicle headlamp housings of the two front headlamp units.

13. Motor vehicle according to claim 12, wherein the motor vehicle has a bumper, wherein each triggering element (5) is connected to the bumper, such that in the event of a collision-induced displacement of the bumper, the triggering element is displaced in the direction of the vehicle headlamp, and thus a displacement of the vehicle headlamp against the main driving direction of the vehicle is made possible.

## Revendications

1. Système de projecteur de véhicule absorbant les chocs (1), comprenant
- au moins un élément de châssis de véhicule (2) pouvant être relié de manière fixe à un véhicule,
- un boîtier de projecteur de véhicule (3) maintenu de manière coulissante sur l'élément de cadre de véhicule (2) avec au moins un tourillon (4) relié au boîtier de projecteur de véhicule (3), lequel est de préférence relié de manière fixe au boîtier de projecteur de véhicule (3), l'élément de châssis de véhicule (2) présentant au moins un guide (2a) pour recevoir et guider linéairement le tourillon (4), le tourillon (4) étant en prise avec le guide (2a), de sorte que le boîtier de phare de véhicule (3) est guidé par le déplacement du tourillon (4) le long du guide (2a) et peut ainsi être déplacé par rapport à l'élément de châssis de véhicule (2),
- au moins un élément de déclenchement (5) pouvant être relié mécaniquement à un pare-chocs d'un véhicule, et
- au moins un mécanisme de déclenchement (6) relié fixement à l'élément de châssis de véhicule (2), qui est conçu pour recevoir l'élément de déclenchement (5) ainsi que le tourillon (4) et pour passer, au moins en fonction de la position de l'élément de déclenchement (5), entre un état (S1) bloquant le tourillon (4) et un état (S2) libérant le tourillon (4), dans lequel, dans l'état (S2) libérant le tourillon (4), le boîtier de projecteur de véhicule (3) peut être déplacé avec le tourillon (4) par rapport à l'élément de châssis de véhicule (2),
où le mécanisme de déclenchement (6) comprend :
*un bras rotatif (6a) monté à rotation dans le mécanisme de déclenchement (6), lequel bras rotatif (6a) présente une zone d'engagement (6a') destinée à recevoir la tige (4), le bras rotatif (6a) étant conçu pour être tourné entre deux positions, à savoir entre une position de maintien (D1), dans laquelle le bras rotatif (6a) s'oppose à un mouvement d'un tourillon (4) reçu dans la zone d'engagement (6a') le long du guide (2a), et une position de libération (D2) dans laquelle le bras rotatif (6a) libère le mouvement du tourillon (4) le long du guide (2a),
*un élément de verrouillage (6b) qui est maintenu dans le mécanisme de déclenchement (6) de manière à pouvoir se déplacer linéairement, l'élément de verrouillage (6b) étant conçu pour s'engager dans le bras rotatif (6a) dans la position de blocage (D1), et pour le verrouiller ou pour autoriser un changement dans la position de libération (D2) en fonction de la position de l'élément de déclenchement (5) dans cette position de blocage (D1), en ce que l'élément de verrouillage (6b) peut être déplacé entre une position de verrouillage (V1) pour bloquer le bras rotatif (6a) et une position de déverrouillage (V2) pour libérer le changement du bras rotatif (6a) dans la position de libération (D2), un premier élément de ressort (6c) étant prévu, qui exerce sur l'élément de verrouillage (6b) une force élastique (FF1) poussant celui-ci dans la position de verrouillage (V1), l'élément de verrouillage (6b) étant couplé mécaniquement à l'élément de déclenchement (5) de telle sorte que dans une position initiale (P1) de l'élément de déclenchement (5), l'élément de verrouillage (6b) est maintenu dans la position de verrouillage (V1) à l'aide du premier élément élastique (6c), et en ce que, suite à un déplacement de la position de l'élément de déclenchement (5) dans une position de déclenchement (P2), l'élément de verrouillage (6b) est déplacé dans la position de déverrouillage (V2) à l'encontre de la force du ressort (FF1), de sorte qu'une rotation du bras rotatif (6a) de la position de maintien (D1) vers la position de libération (D2) est rendue possible, et le mécanisme de déclenchement (6) passe ainsi à l'état de libération (S2).

2. Système de projecteur de véhicule absorbant les chocs (1) selon la revendication 1, dans lequel il est prévu un deuxième élément de ressort (7) relié à l'élément de châssis de véhicule (2) et au boîtier de projecteur de véhicule (3), ledit élément de ressort (7) étant agencé pour exercer une force élastique de rappel (FF2) sur le boîtier de projecteur de véhicule (3) de manière à pousser le téton (4) en direction du bras de rotation (6a).

3. Système de projecteur de véhicule absorbant les chocs (1) selon l'une quelconque des revendications précédentes, dans lequel le mécanisme de déclenchement (6) comprend un troisième élément de ressort (6d) agencé pour exercer sur le bras de rotation (6a) une force (FF3) poussant le bras de rotation (6a) vers la position de maintien (D1).

4. Système de projecteur de véhicule absorbant les chocs (1) selon l'une quelconque des revendications précédentes, dans lequel le mécanisme de déclenchement (6) comprend un élément de retenue (6e) mobile en translation ainsi qu'un quatrième élément élastique (6f), l'élément de retenue (6e) étant agencé, à l'aide de l'élément élastique (6f), pour empêcher un passage du bras rotatif (6a) de la position de libération (D2) à la position de blocage (D1), en exerçant sur un bras rotatif (6a) se trouvant dans la position de déblocage (D2) une force élastique (FF4) qui s'oppose à la force élastique (FF3) du troisième élément élastique (6d) et la dépasse, de sorte que ce n'est que par l'ajout d'une force de rappel (FF2) du deuxième élément élastique (7) exercée par le tourillon (4) qu'un retour en arrière du bras rotatif (6a) est libéré par déplacement de l'élément de retenue (6e) à l'encontre de la force élastique (FF4) du quatrième élément élastique (6f).

5. Système de projecteur de véhicule absorbant les chocs (1) selon l'une quelconque des revendications précédentes, dans lequel l'élément de déclenchement (5) se présente sous la forme d'une saillie, notamment d'un téton.

6. Système de projecteur de véhicule absorbant les chocs (1) selon l'une quelconque des revendications précédentes, dans lequel l'élément de verrouillage (6b) comprend un crochet (6b') destiné à s'engager dans le bras rotatif (6a).

7. Système de projecteur de véhicule absorbant les chocs (1) selon l'une des revendications précédentes, dans lequel le guide (2a) dans l'élément de châssis de véhicule (2) est une rainure ou un trou oblong.

8. Système de projecteur de véhicule absorbant les chocs (1) selon l'une quelconque des revendications précédentes, dans lequel l'élément de verrouillage (6b) est couplé mécaniquement à l'élément de déclenchement (5) de telle sorte que la pénétration de l'élément de déclenchement (5) dans l'élément de verrouillage (6b) pousse l'élément de verrouillage (6b) dans la position de déverrouillage (V2) à l'encontre de la force du premier élément de ressort (6c).

9. Système de projecteur de véhicule absorbant les chocs (1) selon l'une quelconque des revendications précédentes, dans lequel le boîtier de projecteur de véhicule (3) comprend au moins un module d'éclairage agencé pour émettre une distribution lumineuse.

10. Système de projecteur de véhicule absorbant les chocs (1) selon l'une quelconque des revendications précédentes, dans lequel le guide (2a) et le tourillon (4) sont adaptés pour que la course maximale du boîtier de projecteur de véhicule (3) le long du guide (2a) soit comprise entre 3cm et 10cm, notamment entre 5cm et 7cm.

11. Véhicule automobile comprenant au moins un système de projecteur de véhicule absorbant les chocs (1) chocs selon l'une quelconque des revendications précédentes.

12. Véhicule automobile selon la revendication 11, le véhicule automobile présentant deux unités de projecteurs avant pour générer une répartition des feux de croisement ainsi qu'une répartition des feux de route, le véhicule automobile présentant deux systèmes de projecteurs de véhicule absorbant les chocs selon l'une des revendications 1 à 10, les deux boîtiers de projecteurs de véhicule (3) des deux systèmes de projecteurs de véhicule absorbant les chocs formant les boîtiers de projecteurs de véhicule des deux unités de projecteurs avant.

13. Véhicule automobile selon la revendication 12, dans lequel le véhicule automobile est équipée d'un pare-chocs, chaque élément de déclenchement (5) étant relié au pare-chocs, de sorte qu'en cas de déplacement du pare-chocs dû à une collision, l'élément de déclenchement est déplacé en direction du projecteur du véhicule, permettant ainsi un déplacement du projecteur du véhicule dans le sens inverse du sens de marche principal du véhicule.
